# EUROPÄISCHE PATENTANMELDUNG

(11) **EP 1 586 517 A1**
(43) Veröffentlichungstag der Anmeldung: **19.10.2005**
(21) Anmeldenummer: 05003290.3
(22) Anmeldetag: 16.02.2005
(51) Int. Cl.: B65G 19/02

(54) **Transportvorrichtung für Transportrollen**

(30) Priorität: 16.04.2004 DE 102004018568
(71) Anmelder: Gärtner, Franz, 97656 Oberelsbach (DE)
(72) Erfinder: Gärtner, Franz, 97656 Oberelsbach (DE)
(74) Vertreter: Solf, Alexander

(57) **Zusammenfassung**

Die Erfindung betrifft eine Transportvorrichtung mit einer feststehenden Transportschiene (20) und mindestens einer von der Transportschiene getragenen, mit einem zu transportierenden Gut beladbaren, vorzugsweise einen axialen Durchgangskanal aufweisenden Transportrolle (1), die zwei parallel zueinander ausgerichtete scheibenförmige, vorzugsweise kreisrunde, beim Transport der Transportrolle stillstehende Flansche (2,3) und zwischen den Flanschen ein beim Transport der Transportrolle auf der Transportschiene abrollendes drehbar gelagertes Abrollelement (4) kleineren Durchmessers, z. B. in Form einer drehbar gelagerten Hülse, aufweist, wobei parallel seitlich neben der Transportschiene eine Mitnahmeeinrichtung für die Transportrolle angeordnet ist, die eine endlos angetriebene Gliederkette (16) mit an der Gliederkette auf engem Abstand hintereinander gereihten Stiften (18) aufweist, wobei die Stifte horizontal angeordnet sind und sich bis über die Transportschiene, vorzugsweise noch darüber hinaus, erstrecken und dass die Reihe der Stifte mehrere, in vorzugsweise konstantem Abstand vorgesehene Lücken (21) aufweist, in die jeweils die Flansche einer Transportrolle zwischen den Stiften aufgenommen und mitgenommen wird.

## Beschreibung

Die Erfindung betrifft eine Transportvorrichtung mit Transportrollen, die jeweils zwei parallel zueinander ausgerichtete, beabstandete, beim Transport der Rolle stillstehende, scheibenförmige Flansche aufweisen, wobei zwischen den Flanschen eine zum Abrollen auf einer Schiene eingerichtete Hülse drehbar angeordnet ist, und wobei die Flansche und die Hülse zentral von einem Durchgangskanal durchsetzt sind, in den ein Bügelhaken z.B. eines Kleiderbügels einhängbar ist, indem das freie Ende des Bügelhakens aus dem Durchgangskanal herausragt.

Eine Transportrolle dieser Art sowie eine Transportvorrichtung dafür sind z.B. in der EP 1 258 439 B1 beschrieben. Die bekannte Transportrolle hat sich insbesondere zum Transport von auf Kleiderbügeln hängenden Bekleidungsstücken bewährt, wobei die Rolle mit ihrer drehbaren Hülse auf einer Schiene läuft und der Bügelhaken eines Kleiderbügels den Durchgangskanal durchgreift. Der Durchgangskanal ist im Durchmesser so groß gewählt, dass der Bügelhaken bequem eingehängt und wieder ausgehängt werden kann.

Der Transport der Rolle mit eingehängtem Bügelhaken eines mit einem Kleidungsstück bestückten Kleiderbügels auf ebenen Strekken mit entsprechenden Antriebsmitteln stellt keine besonderen Probleme. Beispielsweise kann dies mit vertikal und kammartig auf Abstand angeordneten, angetriebenen Stiften erfolgen, wobei die aus der Transportrolle herausragenden freien Bügelhakenenden in die Lücken zwischen den vertikalen Stiften greifen und von den Stiften mitgenommen werden (EP 1 258 439 B1). Schwierig gestaltet sich dagegen ein Transport auf Steigungs- oder Gefällestrecken, weil der Widerstand der beladenen Transportrolle erheblich größer ist und die Bügelhaken derart verschwenken können, dass sie außer Eingriff gelangen. Das gleiche ist nicht auszuschließen beim Transport auf geraden Strecken, wenn die Last des auf dem Bügel hängenden Gutes relativ schwer ist.

Hierfür eine Lösung zu finden ist Aufgabe der vorliegenden Erfindung. Gelöst wird diese Aufgabe durch die Merkmale des Anspruchs 1. Vorteilhafte Weiterbildung der Erfindung werden in den Unteransprüchen gekennzeichnet.

Anhand der Zeichnung wird die Erfindung im Folgenden beispielhaft näher erläutert. Es zeigen:
- Fig. 1: eine Seitenansicht einer ansteigenden Transportstrecke mit einer erfindungsgemäßen Transportvorrichtung;

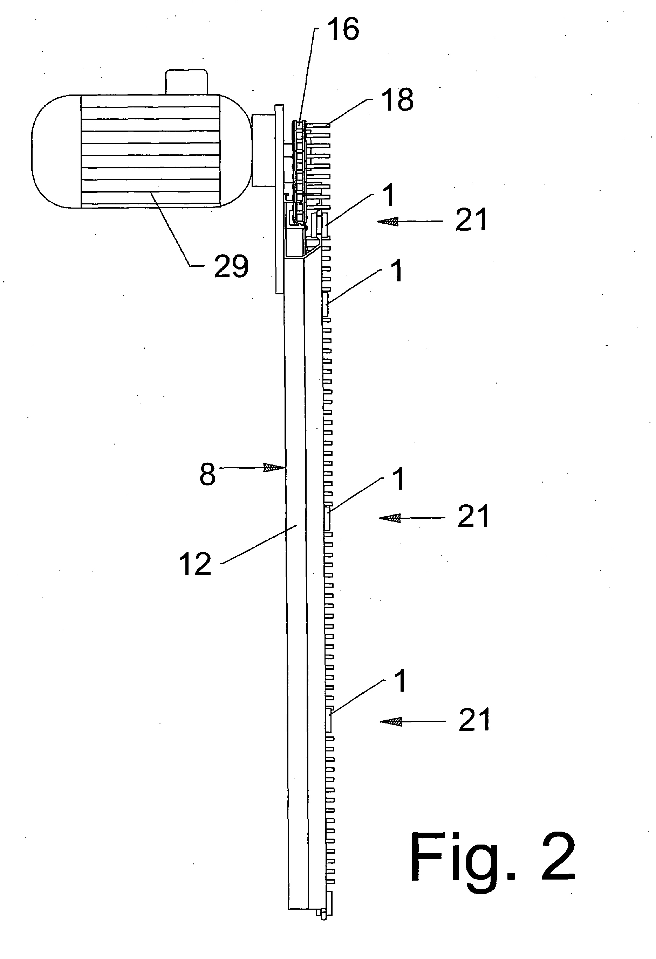

- Fig. 2: eine Stirnansicht der Transportstrecke nach Fig. 1;
- Fig. 3: einen Schnitt durch die ansteigende Transportstrecke entlang der Linie A-A in Fig. 1 mit Blickrichtung in Pfeilrichtung;
- Fig. 4: schematisch eine mit der erfindungsgemäßen Transportvorrichtung transportierbaren, an sich bekannte Transportrolle mit eingehängtem Bügelhaken eines Bügels.

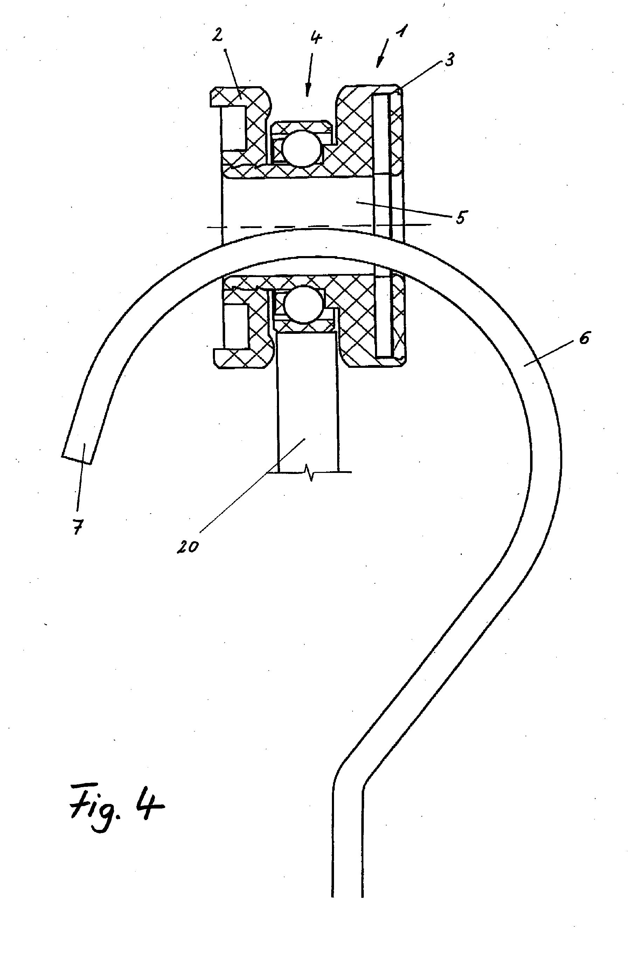

Mit der erfindungsgemäßen Transportvorrichtung werden einzelne Transportrollen 1, wie sie z. B. aus der EP 1 258 439 B1, Fig. 9, bekannt sind, transportiert. Derartige Transportrollen 1 weisen zwei auf Abstand voneinander angeordnete scheibenförmige Flansche 2, 3 und dazwischen eine drehbar angeordnete Hülse 4 kleineren Durchmessers auf (Fig. 4). Die Hülse 4 sitzt auf einer Laufschiene einer Transportstrecke auf und dreht sich während des Transports, während die Flansche 2, 3 dabei keine Drehbewegung ausführen. Die Transportrolle 1 weist außerdem einen axialen bzw. zentralen Durchgangskanal 5 auf, der von einem Bügelhaken 6 eines eingehängten Bügels durchgriffen wird, wobei der Bügelhaken 6 auf während des Transports ruhenden Teilen der Transportrolle lagert und sein freies Hakenende 7 aus dem Durchgangskanal 5 herausragt.

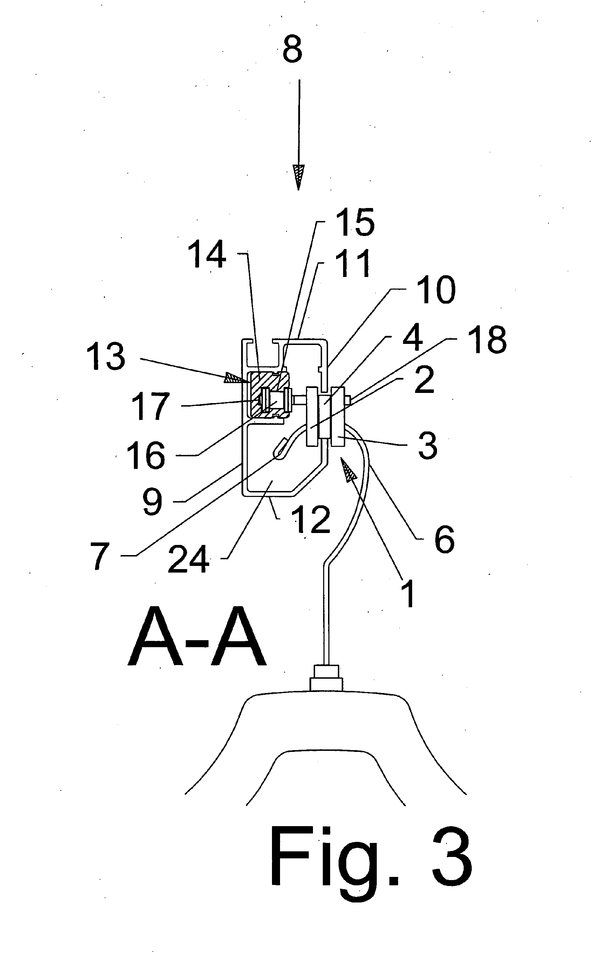

Die erfindungsgemäße Transportvorrichtung weist eine ortsfeste im Wesentlichen rechteckige Hohlprofilschiene 8 mit zwei vertikalen Seitenwandungen 9, 10 einer Deckenwandung 11 und einer Bodenwandung 12 auf. (Fig. 3)

Im Bereich zwischen der Quermitte der einen Seitenwandung 9 und der Deckenwandung 11 ist ein in Richtung der anderen Seitenwandung 10 offener U-förmiger Kettenkanal 13 eingeformt, dessen eine Wandung zweckmäßigerweise von der Seitenwandung 9 gebildet wird. Im Kettenkanal 13 lagert ein durchgehender Kunststoffprofilstrang 14, in den ein in Richtung der anderen Seitenwandung 10 offener Gleitkanal 15 eingebracht ist. Im Gleitkanal 15 lagert der untere Trum 31 einer angetriebenen Gliederkette 16 formschlüssig und verkantungssicher geführt, deren oberer Trum 30 in einer Vertikalebene mit dem unteren Trum 31 außerhalb und oberhalb der Hohlprofilschiene 8 verläuft und deren Kettengliederachsen 17 horizontal ausgerichtet sind. An den Kettengliederachsen 17 sind in deren Verlängerung Stifte 18, vorzugsweise um ihre Längsachse drehbar angeordnet, die aus dem Gleitkanal 15 und dem Kettenkanal 13 heraus in die Hohlprofilschiene 8 ragen.

Im Bereich der Quermitte ist in die Hohlprofilschiene 8 in die andere Seitenwandung 10 ein durchgehender Längsschlitz 19 eingebracht, dessen Längskantenabstand etwas größer als der Durchmesser der Hülse 4 und etwas kleiner ist als der Durchmesser der Flansche 2, 3 der Transportrolle 1 beträgt, wobei die untere Längskante eine Laufschiene 20 für die Hülse 4 bildet. Dabei sind die Stifte 18 der Gliederkette 16 derart positioniert, dass sie den Längsschlitz 19 etwas durchgreifen.

Nach der Erfindung ist der Abstand zwischen zwei benachbarten Stiften 18 wesentlich kleiner z. B. um ein Fünftel bis ein Drittel kleiner als der Durchmesser der Flansche 2, 3 beträgt, wobei in vorbestimmten Abständen größere Lücken 21 bildend Stifte 18 fehlen. Der Abstand der benachbarten Stifte 18 in einer Lücke 21 ist kleiner als der Durchmesser der Flansche 2, 3, jedoch so groß, dass die Flansche 2, 3 von einem Stift 18 der Lücke hintergriffen und die Rolle 1 vom Stift mitgenommen werden kann. Insofern kann eine auf der Laufschiene 20 lagernde Transportrolle 1, wenn sie in einer Lücke 21 sitzt, vom in Transportrichtung 22 hinteren Stift 18 einer Lücke 21 in Transportrichtung 22 geschoben werden, wenn die Transportkette 16 angetrieben wird.

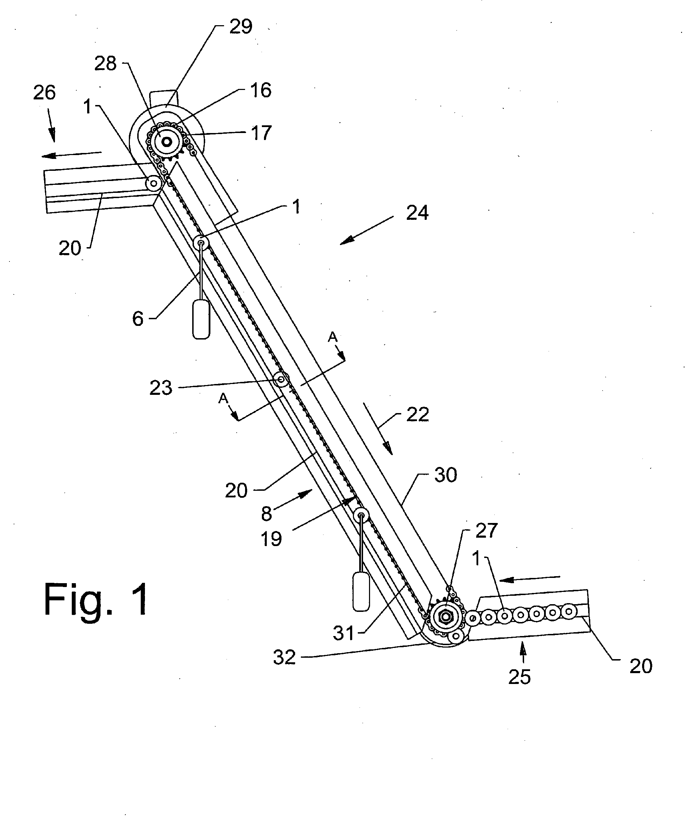

Im dargestellten Beispiel ist die Lücke 21 etwas enger als der Durchmesser der Flansche 2, 3 beträgt, so dass der in Transportrichtung 22 hintere Stift 18 der Lücke 21 zwischen der Drehachse 23 der Transportrolle 1 und der Mantelfläche der Flansche 2, 3 z. B. unterhalb eines Viertels des Radius der Flansche 2, 3 angreift (Fig. 1, 3).

Für das freie Ende 7 des Bügelhakens 6 ist zweckmäßigerweise innerhalb der Profilschiene 8 ein freier Durchgangskanal 24 unterhalb des Kettenkanals 13 vorgesehen.

Es liegt im Rahmen der Erfindung anstelle einer Profilschiene 8, die sowohl den Kettenkanal 13 als auch die Laufschiene 20 aufweist, zwei separate Elemente zu verwenden.

Nach einer bevorzugten Ausführungsform der Erfindung ist die erfindungsgemäße Transportvorrichtung als Steigungsstrecke, wie abgebildet, ausgeführt.

Eine solche Steigungsstrecke weist eine aufsteigende Transportstrecke 24, eine vorzugsweise etwas zur Transportstrecke 24 nach unten geneigte, untere Zuführstrecke 25 und eine obere, vorzugsweise von der Transportstrecke 24 etwas weg abwärts geneigte Abführstrecke 26 auf. Die Strecken 25 und 26 sind zweckmäßigerweise ebenfalls Profilschienen mit einer Laufschiene 20 für die Transportrollen 1.

Am unteren Ende der Transportstrecke 24 ist ein Kettenrad 27 und am oberen Ende ein Kettenrad 28 angeordnet, wobei das obere Kettenrad 28 mit einem Antriebsmotor 29 in Verbindung steht. Über die Kettenräder 27, 28 wird die Antriebskette 16 mit einem oberen Trum 30 und einem unterem Trum 31 endlos geführt, wobei die Zuführstrecke 25 kurz vor dem oberen Trum 30 vor dem Kettenrad 27 endet und die Abführstrecke 26 kurz unterhalb des Kettenrads 28 unterhalb des unteren Trums 31 ansetzt, so dass die Streckenführung - von der Seite betrachtet - etwa Z-förmig verläuft.

Von der Laufschiene 20 der Zuführstrecke 25 erstreckt sich ein bogenförmiger Verbindungssteg 32 zur Laufschiene 20 der Transportstrecke 24, wobei das kettenradseitige Ende der Laufschiene 20 der Zuführstrecke 25 etwa im Abstand des Durchmessers einer Transportrolle 1 von den Stiften 18 der Transportkette 16 angeordnet ist. Etwa im gleichen Abstand befindet sich die Ablaufschiene 20 der Abführstrecke 26 von den Stiften 18 des unteren Trums 31 der Transportkette 16.

Aufgrund des gewählten Aufbaus der Strecken 24, 25, 26 und der Transportlücken 21 zwischen den Stiften 18 wird eine am Zuführende der geneigten Zuführstrecke 25 ruhende Transportrolle 1 von den eng benachbarten Stiften 18 der in Transportrichtung 22 laufenden Transportkette 16 nicht mitgenommen, sondern in ihrer Position zurückgehalten. Wenn eine Lücke 21 bei der z. B. vordersten Transportrolle 1 einer z. B. aufgestauten Transportrollenreihe (Fig. 1) auftaucht, fällt diese Transportrolle 1 in die Lücke 21 gegen die Stifte 18, kann aber nicht durchfallen, weil der Abstand der Stifte 18 der Lücke 21 zumindest etwas geringer ist als der Durchmesser der Flansche 2, 3. Die Transportrolle 1 wird von den Stiften 18 der Lücke 21 getragen und nach unten mitgenommen, wobei die Transportrolle 1 vom Verbindungssteg 32 vorzugsweise an der drehenden Hülse 4 abgestützt wird. Im aufwärts steigenden unteren Trum 31 wird die Transportrolle 1 vom hinteren Stift 18 der Lücke 21 auf die Laufschiene 20 der Transportstrecke 24 geschoben und bis zur Abführstrecke 26 mitgenommen. Am Anfang der Abführstrecke 26 fällt die Transportrolle 1 aus der Lücke 21 auf die Laufschiene 20 der Abführstrecke 26 und rollt selbständig weiter.

Bei der erfindungsgemäßen Transportvorrichtung wird keinerlei Reibung während des Transports erzeugt. Denn die Flansche 2, 3 der Transportrolle 1 stehen dabei still ebenso wie die Wandungen des Durchgangskanals 5, so dass weder die Stifte 18 noch der Bügelhaken 6 Reibung an der Transportrolle 1 erzeugen können.

Es liegt im Rahmen der Erfindung, anstelle der eng benachbarten Stifte 18 Leisten (nicht dargestellt) zu verwenden, die auf Abstand voneinander die Lücke 21 bildend angeordnet sind.

## Patentansprüche

1. Transportvorrichtung mit einer feststehenden Transportschiene (20) und mindestens einer von der Transportschiene (20) getragenen, mit einem zu transportierenden Gut beladbaren, vorzugsweise einen axialen Durchgangskanal aufweisenden Transportrolle (1), die zwei parallel zueinander ausgerichtete scheibenförmige, vorzugsweise kreisrunde, beim Transport der Transportrolle (1) stillstehende Flansche (2, 3) und zwischen den Flanschen (2, 3) ein beim Transport der Transportrolle (1) auf der Transportschiene (20) abrollendes drehbar gelagertes Abrollelement (4) kleineren Durchmessers, z. B. in Form einer drehbar gelagerten Hülse, aufweist, wobei parallel seitlich neben der Transportschiene (20) eine Mitnahmeeinrichtung für die Transportrolle (1) angeordnet ist, die eine endlos angetriebene Gliederkette mit an der Gliederkette auf engem Abstand hintereinander gereihten Stiften aufweist,
**dadurch gekennzeichnet,**
**dass** die Stifte (18) horizontal angeordnet sind und sich bis über die Transportschiene (20), vorzugsweise noch darüber hinaus, erstrecken und dass die Reihe der Stifte (18) mehrere, in vorzugsweise konstantem Abstand vorgesehene Lücken (21) aufweist, in die jeweils die Flansche (2, 3) einer Transportrolle (1) zwischen den Stiften (18) aufgenommen und mitgenommen wird.

2. Transportvorrichtung nach Anspruch 1,
**dadurch gekennzeichnet,**
**dass** die Stifte (18) in einer Ebene über der Transportschiene (20) angeordnet sind, die zwischen der Drehachse des drehenden Abrollelements (4) und der von der Transportschiene entfernteren Kulmination der Flansche (2, 3) liegt.

3. Transportvorrichtung nach Anspruch 1 und/oder 2,
**dadurch gekennzeichnet,**
**dass** der Abstand der Stifte (18) in einer Lücke (21) kleiner als der Radius der Flansche (2, 3) ist.

4. Transportvorrichtung nach Anspruch 3,
**dadurch gekennzeichnet,**
**dass** der Abstand der Stifte (18) in einer Lücke (21) kleiner als ein Viertel des Radius der Flansche (2, 3) beträgt und größer als die Stiftdicke ist.

5. Transportvorrichtung nach einem oder mehreren der Ansprüche 1 bis 4,
**dadurch gekennzeichnet,**
**dass** die Transportschiene (20) Teil einer ortsfesten im Wesentlichen rechteckigen Hohlprofilschiene (8) ist, die zwei vertikale Seitenwandungen (9, 10), eine Deckenwandung (11) und eine Bodenwandung (12) aufweist, wobei in der einen Seitenwandung (10) ein durchgehender Längsschlitz (19) eingebracht ist, dessen Längskantenabstand etwas größer als der Durchmesser des Abrollelements (4) und etwas kleiner als der Durchmesser der Flansche (2, 3) ist, wobei die untere Längskante die Transportschiene bildet.

6. Transportvorrichtung nach Anspruch 5,
**dadurch gekennzeichnet,**
**dass** im Bereich zwischen der Quermitte der anderen Seitenwandung (9) und der Deckenwandung (11) ein in Richtung der einen Seitenwandung (10) offener, U-förmiger Kettenkanal (13) angeordnet ist, in dem ein durchgehender Kunststoffprofilstrang (14) lagert, in den ein in Richtung der einen Seitenwandung (10) offener Gleitkanal (15) eingebracht ist.

7. Transportvorrichtung nach Anspruch 6,
**dadurch gekennzeichnet,**
**dass** im Gleitkanal (15) der untere Trum (31) einer angetriebenen Gliederkette (16) verkantungssicher geführt wird, deren oberer Trum (30) in einer Vertikalebene mit dem unteren Trum (31) außerhalb und oberhalb der Hohlprofilschiene (8) verläuft und deren Kettengliederachsen (17) horizontal ausgerichtet sind.

8. Transportvorrichtung nach Anspruch 7,
**dadurch gekennzeichnet,**
**dass** an den Kettengliederachsen (17) in deren Verlängerung Stifte (18), vorzugsweise um ihre Längsachse drehbar angeordnet sind, die aus dem Gleitkanal (15) und dem Kettenkanal (13) heraus in die Hohlprofilschiene (8) ragen.

9. Transportvorrichtung nach Anspruch 8,
**dadurch gekennzeichnet,**
**dass** die Stifte (18) der Gliederkette (16) derart positioniert sind, dass sie den Längsschlitz (19) etwas durchgreifen.

10. Transportvorrichtung nach einem oder mehreren der Ansprüche 1 bis 9,
**dadurch gekennzeichnet,**
**dass** der Abstand zwischen zwei benachbarten Stiften wesentlich kleiner, z. B. ein Fünftel bis ein Drittel kleiner als der Durchmesser der Flansche (2, 3) beträgt, wobei in vorbestimmten Abständen größere Lücken (21) bildend Stifte (18) fehlen.

11. Transportvorrichtung nach Anspruch 10,
dass der Abstand der benachbarten Stifte (18) in einer Lücke (21) kleiner ist als der Durchmesser der Flansche (2, 3), jedoch so groß ist, dass die Flansche (2, 3) von einem Stift (18) der Lücke hintergriffen und die Transportrolle (1) vom Stift mitgenommen werden kann.

12. Transportvorrichtung nach Anspruch 11,
**dadurch gekennzeichnet,**
**dass** die Lücke (21) etwas enger ist als der Durchmesser der Flansche (2, 3) beträgt, so dass der in Transportrichtung hintere Stift der Lücke (21) zwischen der Drehachse (23) der Transportrolle (1) und der Mantelfläche der Flansche (2, 3), z. B. unterhalb eines Viertels des Radius der Flansche (2, 3) angreift.

13. Transportvorrichtung nach einem oder mehreren der Ansprüche 1 bis 12,
**dadurch gekennzeichnet,**
**dass** innerhalb der Profilschiene (8) unterhalb des Kettenkanals (13) ein freier Durchgangskanal (24) vorgesehen ist, in den das freie Ende (7) eines den Durchgangskanal (5) durchgreifenden Bügelhakens (6) ragen kann.

14. Transportvorrichtung nach einem oder mehreren der Ansprüche 1 bis 13,
**dadurch gekennzeichnet,**
**dass** sie als Steigungsstrecke ausgebildet ist.

15. Transportvorrichtung nach Anspruch 14,
**dadurch gekennzeichnet,**
**dass** die Steigungsstrecke eine aufsteigende Transportstrecke (24) eine, vorzugsweise etwas zur Transportstrecke (24) nach unten geneigte, untere Zuführstrecke (25) und eine obere, vorzugsweise von der Transportstrecke (24) etwas weg abwärts geneigte Abführstrecke (26) aufweist.

16. Transportvorrichtung nach Anspruch 15,
**dadurch gekennzeichnet,**
**dass** die Strecken (25 und 26) ebenfalls als Hohlprofilschienen mit einer Transportschiene (20) für die Transportrollen (1) sind.

17. Transportvorrichtung nach Anspruch 15 und/oder 16,
**dadurch gekennzeichnet,**
**dass** am unteren Ende der Transportstrecke (24) ein Kettenrad (27) und am oberen Ende ein Kettenrad (28) angeordnet sind, wobei eines der Kettenräder (27, 28) mit einem Antriebsmotor (29) in Verbindung steht und wobei über die Kettenräder (27, 28) die Antriebskette (16) mit dem oberen Trum (30) und dem unteren Trum (31) endlos geführt wird.

18. Transportvorrichtung nach Anspruch 17,
**dadurch gekennzeichnet,**
**dass** die Zuführstrecke (25) kurz vor dem oberen Trum (30) vor dem Kettenrad (27) endet und die Abführstrecke (26) kurz unterhalb des Kettenrads (28) unterhalb des unteren Trums (31) ansetzt.

19. Transportvorrichtung nach Anspruch 17 und/oder 18,
**dadurch gekennzeichnet,**
**dass** von der Transportschiene (20) der Zuführstrecke (25) sich ein bogenförmiger Verbindungssteg (32) zur Transportschiene (20) der Transportstrecke (24) erstreckt, wobei das kettenradseitige Ende der Transportschiene (20) der Zuführstrecke (25) etwa im Abstand des Durchmessers einer Transportrolle von den Stiften (18) der Transportkette (16) angeordnet ist.

20. Transportvorrichtung nach einem oder mehreren der Ansprüche 17 bis 19,
**dadurch gekennzeichnet,**
**dass** sich etwa im gleichen Abstand die Transportschiene (20) der Abführstrecke (26) von den Stiften (18) des unteren Trums (31) der Transportkette (16) befindet, wie die Transportschiene (20) der Zuführstrecke (25).

21. Transportvorrichtung nach Anspruch 19 und/oder 20,
**dadurch gekennzeichnet,**
**dass** die Transportrolle (1) vom Verbindungssteg (32) am drehenden Abrollelement (4) abgestützt wird.
